# EUROPEAN PATENT SPECIFICATION

(11) **EP 2 531 451 B1**
(45) Date of publication and mention of the grant of the patent: **15.07.2015**
(21) Application number: 10808020.1
(22) Date of filing: 13.08.2010
(51) Int. Cl.: C02F 1/465, B03D 1/14, C02F 1/463, C02F 101/10, C02F 103/10, C02F 103/36

(54) **METHOD AND APPARATUS FOR THE PURIFICATION OF HYDROGEN SULFIDE -CONTAINING AQUEOUS SOLUTIONS**
VERFAHREN UND VORRICHTUNG ZUR REINIGUNG VON WASSERSTOFFSULFIDHALTIGEN WÄSSRIGEN LÖSUNGEN
PROCÉDÉ ET APPAREIL DE PURIFICATION DE SOLUTIONS AQUEUSES CONTENANT DU SULFURE D HYDROGÈNE

(30) Priority: 14.08.2009 FI 20095845
(43) Date of publication of application: 12.12.2012
(73) Proprietor: Suominen, Lauri Hannunpoika, San Diego CA 92121 (US)
(72) Inventor: Suominen, Hannu, Maple Gorve, MN 5531 (US)
(74) Representative: LEITZINGER OY
(86) International application number: PCT/FI2010/050632
(87) International publication number: WO 2011/018556

(56) References cited:
- DE-A1- 3 641 365
- DE-A1- 10 057 347
- DE-C1- 4 236 723
- US-A- 3 806 435
- US-A1- 2007 029 201
- MURUGANANTHAN M ET AL: "Separation of pollutants from tannery effluents by electro flotation", SEPARATION AND PURIFICATION TECHNOLOGY, ELSEVIER SCIENCE, AMSTERDAM, NL, vol. 40, no. 1, 15 November 2004 (2004-11-15), pages 69-75, XP004558241, ISSN: 1383-5866, DOI: 10.1016/J.SEPPUR.2004.01.005

## Description

Oil and gas drilling operations result in large quantities of produced water which contains considerable amounts of hydrogen sulfide dissolved in water. Given the toxicity of hydrogen sulfide, the treatment of produced water has become problematic. Hydrogen sulfide is a product of anaerobic microbial activity, resulting in the presence of hydrogen sulfide in many other water solutions as well, such as in landfill effluent.

US 2007/0029201 A1 (Hannu L. Suominen) discloses a method consistent with the preamble of claim 1, which enables providing oxidation-reduction reactions of desired types by regulating the current in cell elements.

US 3 806 435 discloses a method for treating waste liquor which comprises subjecting a waste liquor containing e.g. hydrogen sulfide to an electrolytic treatment using an anode of iron/aluminum or zinc/aluminum and a cathode of iron or zinc.

It is an object of the invention to further develop and enhance this prior known method for making it applicable to the purification of hydrogen sulfide-containing aqueous solutions. A specific application of the invention is the removal of hydrogen sulfide from produced water created in oil or gas drilling, while cleaning the produced water in other respects as well, thus enabling environmentally sound oil and gas drilling operations.

This object is achieved by the invention in the basis of method characterizing features presented in the appended claim 1.

The object is also achieved by means of an apparatus presented in the appended claim 6. Preferred embodiments of the invention are presented in the dependent claims.

One working example of the invention will now be described more closely with reference to the accompanying drawings, in which
- Fig. 1: shows an apparatus according to one embodiment of the invention in a schematic vertical section, said apparatus enabling a method of the invention to be implemented, and
- Fig. 2: shows an apparatus according to a second embodiment of the invention.

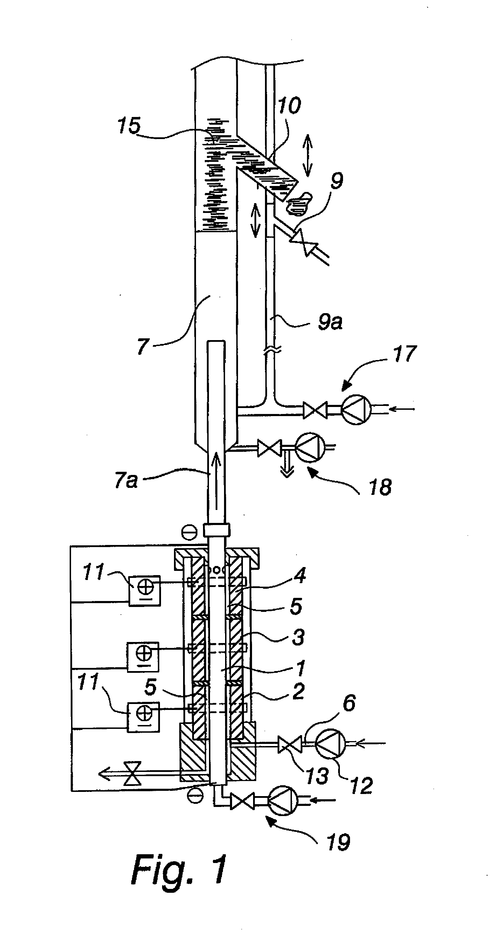

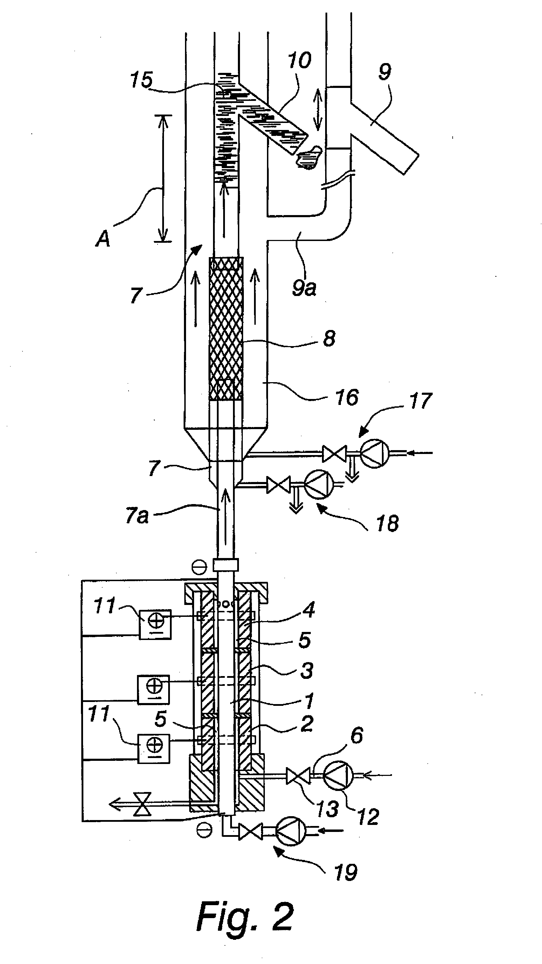

Figs. 1 and 2 only differ from each other in terms of top sections thereof, i.e. in terms of an extraction tower for separating water from flock produced as a result of electrolysis. Reference is first made to features common to both figures in a special application of the invention.

Produced water from oil or gas drilling is delivered by a pump 12 through a pipe 6 and a valve into a cell, the latter including a first upstream cell element, wherein an inner electrode 1 is surrounded by a tubular aluminum electrode 2. The next is a tubular iron electrode 3 and the last one is a tubular aluminum electrode 4. The electrodes are separated from each other by a dielectric, and the electric current passing across each cell element 2, 3, 4 is regulated individually, i.e. the electrodes are connected to separate and individually controlled power sources 11. The inner electrode 1 can be common to all cell elements, or it may be provided with a different coating at different cell elements 2, 3,4. What is essential is that the negative inner electrode 1 is more electronegative than the positive outer electrode, which can be for example an aluminum and iron electrode. The inner electrode can be made of stainless steel, nickel, chromium, platinum, or precious metal alloys with a major difference in electronegativity with respect to the outer electrode. The power sources 11 have their positive poles coupled to the outer electrodes and their negative pole to the inner electrode. The aqueous solution to be cleaned is passed across an annular electrolysis space 5 of the successive electrolytic cell elements 2, 3, 4, and currents in the cell elements are regulated in such a way that the cell element 2 equipped with an aluminum electrode produces aluminum hydroxide and aluminum sulfate and the cell element 3 equipped with an iron electrode produces iron hydroxide. Since the aluminum electrode 2 precedes the iron electrode 3, the sulfur of hydrogen sulfide is obtained in aluminum sulfate, thus avoiding the problem of the cell element with an iron electrode producing iron sulfide, which upon precipitation does not turn into a solid matter that would discharge along with the flock. The aluminum hydroxide, evolving in the cell element 2 equipped with an aluminum electrode, works as a molecular sieve, and the iron hydroxide, evolving in the cell element 3 equipped with an iron electrode, works also as a molecular sieve which is nevertheless denser than the molecular sieve provided by aluminum hydroxide. The precipitate produced jointly by aluminum hydroxide and iron hydroxide is well capable of binding those very small hydrogen bubbles created in the reactions, and at the same time it also bonds the aluminum sulfate to the developing flock, which is raised upward by hydrogen bubbles evolving on the negative electrode. The flock, which is generated jointly by the developing precipitate and the hydrogen bubbles, has a specific gravity which is slightly less than that of water, whereby the flock rises within a water and flock separating tower 7 at a faster rate than the flow of water proceeding therein.

Prior to the rise of precipitate or flock up into the extraction tower 7, it is preferred that the final cell element be provided with one more aluminum electrode 4 capable of removing dissolved residual iron from the water. The iron ion Fe₃, evolving in the iron cell element 3, is sufficiently large for becoming trapped in an aluminum hydroxide mesh.

The aqueous solution to be purified, and the reaction results which had evolved as described in electrolytic cell elements and precipitated into a solid matter, are passed into the extraction tower 7 and rise therein by the action of hydrogen released in electrolysis, accumulating for a flock 15 in a top end of the extraction tower 7, the flock going out by way of an outlet pipe 10.

In the working example of fig. 1, a purified water outlet pipe 9 connects by way of an upright pipe branch 9a to a bottom part of the extraction tower 7 below the top end of a supply pipe 7a. The level of the pipe branch 9 is adjustable, typically within a formation region of the flock 15, to a position not higher than the level of the pipe branch 10. This adjustment can be used as a means of having an impact on the moisture content of outgoing flock.

Reference numerals 17, 18 and 19 stand for washing lines, by way of which the apparatus is cleaned at prescribed intervals.

In fig. 2, the extraction tower 7 is provided over a portion of its length with a mesh wall 8, which is surrounded by a purified water collecting pipe 16. Connected to the pipe 16, by way of a pipe branch 9a, is a purified water outlet pipe 9, which is provided with a level adjusting means useful for regulating the moisture content of a flock 15 accumulating in a top end of the extraction tower 7. Hence, the extraction tower 7 and the pipes 16 and 9 establish a communicating vessel by way of the mesh 8, whereby, as the level of the pipe 9 is lowered, the water level in the tower 7 is also lowered and the flock 15 present at a flock outlet pipe 10 becomes drier. The moisture content of flock 15 can be adjusted so as to enable its flow by itself out of the outlet pipe 10 without requiring a separate scraper. The mesh wall 8 only functions as a flow guide, not as a sieve.

The proposed method and apparatus enable the extraction of hydrogen sulfide from water in the form of aluminum sulfate evolving in the flock 15. Along with hydrogen sulfide, many other impurities can be extracted from produced water into the flock 15, making the purified water returnable to nature or reusable in the process of oil or gas production.

Described above is just one cell, along with an extraction tower therefor. A desired number of such cells, along with extraction towers therefor, can be set in a parallel relationship, whereby a valve 13 can be used for closing or opening the number of side-by-side purification units consistent with the amount of produced water. The positive electrodes in the cells of side-by-side purification units can be connected in parallel from a single power source 11.

The annular aluminum and iron electrodes 2, 3, 4 may have an inner diameter varying typically within the range of 50-100 mm, a length which can be about 250 mm, and a wall thickness of about 10 mm. The extraction tower 7 has a length of even several tenfold with respect to its inner diameter. Hence, the evolving flock 15 and the purified water have enough time to separate from each other.

The current and voltage values for cell elements, capable of providing desired reactions, depend on multiple aspects such as the conductance of a solution, its flow rate across the cell, and the electronegativity difference between solution components and anode. The conductance of a solution can be regulated with additives and the flow rate can be adjusted as desired. Because of its participation in the reaction, the solution has its conductance changing during the reaction. These reasons necessitate that optimal current and voltage values be found experimentally for each application. Typically, the operation proceeds within a current range of 10-100 A and a voltage range of 100-10 V. In one application, the voltage can be 10 V and the current 40-50 A. In another application, the voltage can be 50 V and the current 20-30 A. In addition, each cell element is different in terms of its voltage and current in order to enable each cell element to have an optimal input in its own reaction. Consequently, this requires plenty of trial runs with various current and voltage values before finding proper current and voltage values for each application. This notwithstanding, a skilled artisan will be able to employ the invention, because the practice of trial runs and tabulation of values and measuring results is routine work.

The extraction tower 7 is preferably made transparent at least over a piece of its length in order to enable conducting a rough adjustment of current and voltage values by monitoring the formation of flock. An objective is the formation of sharply defined flock, with clear liquid remaining therebelow.

## Claims

1. A method for the purification of hydrogen sulfide-containing aqueous solutions, said method comprising passing the aqueous solution to be purified across at least two electrolytic cell elements (2, 3, 4), at least one of such cell elements employing a positive aluminum electrode and at least one other cell element employing a positive iron electrode, passing the aqueous solution to be purified, and reaction results obtained in the cell elements, into an extraction tower (7), and raising, by means of hydrogen released in electrolysis, the precipitate consisting of reaction results to a top end of the extraction tower (7) for a flock (15), and discharging purified water from the extraction tower, **characterized in that** the aqueous solution, which has been passed across the cell element equipped with an aluminum electrode, is passed across the cell element equipped with an iron electrode and only lastly into the extraction tower (7), that the cell elements' current is regulated, such that the cell element equipped with an aluminum electrode develops aluminum hydroxide and aluminum sulfate and the cell element equipped with an iron electrode develops iron hydroxide, and the precipitate consisting of aluminum hydroxide, aluminum sulfate and iron hydroxide is raised, by means of hydrogen released in electrolysis, to a top end of the extraction tower (7) for the flock (15), thus enabling the extraction of hydrogen sulfide in the form of aluminum sulfate from water into the flock (15).

2. A method as set forth in claim 1, **characterized in that** the aqueous solution is passed across successively coupled cell elements directly from one cell element to the next.

3. A method as set forth in claim 1 or 2, **characterized in that** the electric current passing across each cell element (2, 3, 4) is regulated individually.

4. A method as set forth in claim 3, **characterized in that** the furthermost upstream and downstream cell elements are provided by cell elements equipped with an aluminum electrode, between which are provided one or more cell elements equipped with an iron electrode.

5. A method as set forth in any of claims 1-4, **characterized in that** the method enables the removal of hydrogen sulfide from produced water created in oil or gas drilling.

6. An apparatus for the purification of hydrogen sulfide-containing aqueous solutions, said apparatus comprising an electrolytic cell which includes at least one cell element (2, 4) equipped with an aluminum electrode and at least one cell element (3) equipped with an iron electrode, as well as a water and electrolytically produced flock separating extraction tower (7) fitted with a purified water outlet pipe (9), **characterized in that** the aqueous solution to be purified has been passed from the cell element (2) equipped with an aluminum electrode directly into the cell element (3) equipped with an iron electrode, and that the extraction tower is in flow communication with the top end of a cell established by the successively coupled cell elements (2, 3).

7. An apparatus as set forth in claim 6, **characterized in that** the purified water outlet pipe (9) constitutes a communicating vessel with the extraction tower (7).

8. An apparatus as set forth in claim 7, **characterized in that** the purified water outlet pipe (9) is provided with a level adjustment (14), which enables regulating the moisture content of a flock (15) accumulating in a top end of the extraction tower (7).

9. An apparatus as set forth in claim 6, **characterized in that** the aluminum and iron electrodes are coupled to separate and individually controlled power sources.

10. An apparatus as set forth in any of claims 6-9, **characterized in that** the extraction tower is provided over a piece of its length with a mesh wall (8), which is surrounded by a purified water collecting pipe (16).

## Patentansprüche

1. Verfahren zur Reinigung schwefelwasserstoffhaltiger wässriger Lösungen, wobei das Verfahren das Führen der zu reinigenden wässrigen Lösung über mindestens zwei elektrolytische Zellelemente (2, 3, 4) umfasst, wobei mindestens eins der Zellelemente eine positive Aluminiumelektrode und mindestens ein anderes Zellelement eine positive Eisenelektrode verwendet, das Führen der zu reinigenden wässrigen Lösung und der in den Zellelementen erzielten Reaktionsergebnisse in einen Extraktionsturm (7) und das Anheben des Niederschlages, der aus Reaktionsergebnissen besteht, zu einem oberen Ende des Extraktionsturms (7) für einen Flock (15) mittels des in der Elektrolyse freigesetzten Wasserstoffs und das Ablassen gereinigten Wassers aus dem Extraktionsturm, **dadurch gekennzeichnet, dass** die wässrige Lösung, die über das Zellelement geführt wurde, das mit einer Aluminiumelektrode ausgestattet ist, über das Zellelement geführt wird, das mit einer Eisenelektrode ausgestattet ist, und erst als Letztes in den Extraktionsturm (7), dadurch, dass der Strom der Zellelemente derart geregelt wird, dass das mit der Aluminiumelektrode ausgestattete Zellelement Aluminiumhydroxid und Aluminiumsulfat bildet und das mit einer Eisenelektrode ausgestattete Zellelement Eisenhydroxid bildet und dass der Niederschlag, der aus Aluminiumhydroxid, Aluminiumsulfat und Eisenhydroxid besteht, für den Flock (15) mittels in der Elektrolyse freigesetzten Wasserstoffs zu einem oberen Ende des Extraktionsturms (7) angehoben wird, was die Extraktion von Schwefelwasserstoff in Form von Aluminiumsulfat aus Wasser in den Flock (15) ermöglicht.

2. Verfahren nach Anspruch 1, **dadurch gekennzeichnet, dass** die wässrige Lösung über aneinandergereihte Zellelemente direkt von einem Zellelement zum nächsten geführt wird.

3. Verfahren nach Anspruch 1 oder 2, **dadurch gekennzeichnet, dass** der elektrische Strom, der jedes Zellelement (2, 3, 4) durchläuft, einzeln geregelt wird.

4. Verfahren nach Anspruch 3, **dadurch gekennzeichnet, dass** das am weitesten prozessaufwärtige und das am weitesten prozessabwärtige Zellelement von Zellelementen gebildet werden, die mit einer Aluminiumelektrode ausgestattet sind, zwischen denen ein oder mehr Zellelemente bereitgestellt sind, die mit einer Eisenelektrode ausgestattet sind.

5. Verfahren nach einem der Ansprüche 1 bis 4, **dadurch gekennzeichnet, dass** das Verfahren das Entfernen von Schwefelwasserstoff aus beim Öl- oder Gasbohren anfallenden Wasser ermöglicht.

6. Vorrichtung zur Reinigung schwefelwasserstoffhaltiger wässriger Lösungen, wobei die Vorrichtung eine elektrolytische Zelle umfasst, die mindestens ein Zellelement (2, 4) beinhaltet, das mit einer Aluminiumelektrode ausgestattet ist, und mindestens ein Zellelement (3), das mit einer Eisenelektrode ausgestattet ist, sowie einen Extraktionsturm (7) zum Trennen von Wasser und einem elektrolytisch erzeugten Flock, wobei der Turm mit einer Auslassleitung (9) für gereinigtes Wasser versehen ist, **dadurch gekennzeichnet, dass** die zu reinigende wässrige Lösung vom Zellelement (2), das mit einer Aluminiumelektrode ausgestattet ist, direkt in das Zellelement (3) geführt wurde, das mit einer Eisenelektrode ausgestattet ist, und dass der Extraktionsturm in Strömungsverbindung mit dem oberen Ende einer Zelle steht, die von den aneinandergereihten Zellelementen (2, 3) gebildet ist.

7. Vorrichtung nach Anspruch 6, **dadurch gekennzeichnet, dass** die Auslassleitung (9) für gereinigtes Wasser einen Verbindungsbehälter mit dem Extraktionsturm (7) bildet.

8. Vorrichtung nach Anspruch 7, **dadurch gekennzeichnet, dass** die Auslassleitung (9) für gereinigtes Wasser mit einer Pegeleinstellung (14) ausgestattet ist, die das Regulieren des Feuchtigkeitsgehalts eines Flock (15) ermöglicht, der sich in einem oberen Ende des Extraktionsturms (7) ansammelt.

9. Vorrichtung nach Anspruch 6, **dadurch gekennzeichnet, dass** die Aluminium- und die Eisenelektrode an separate und einzeln gesteuerte Energiequellen gekoppelt sind.

10. Vorrichtung nach einem der Ansprüche 6 bis 9, **dadurch gekennzeichnet, dass** der Extraktionsturm über einen Teil seiner Länge mit einer Gitterwand (8) ausgestattet ist, die von einer Sammelleitung (16) für gereinigtes Wasser umgeben ist.

## Revendications

1. Procédé de purification de solutions aqueuses contenant du sulfure d'hydrogène, ledit procédé comprenant le fait de faire passer la solution aqueuse à purifier à travers au moins deux éléments à cellule électrolytique (2, 3, 4), au moins un de ces éléments à cellule utilisant une électrode en aluminium positive et au moins un autre élément à cellule utilisant une électrode en fer positive, le fait de faire passer la solution aqueuse à purifier et les résultats réactionnels obtenus dans les éléments à cellule dans une tour d'extraction (7) et de faire monter, au moyen de l'hydrogène dégagé pendant l'électrolyse, le précipité consistant en résultats réactionnels vers une extrémité supérieure de la tour d'extraction (7) pour obtenir un floculat (15), et le fait de décharger l'eau purifiée de la tour d'extraction, caractérisé en qu'on fait passer la solution aqueuse qui est passée à travers l'élément à cellule équipé d'une électrode en aluminium à travers l'élément à cellule équipé d'une électrode en fer et seulement enfin dans la tour d'extraction (7), que le courant de l'élément à cellule est régulé de manière à ce que l'élément à cellule équipé d'une électrode en aluminium produise de l'hydroxyde d'aluminium et du sulfate d'aluminium, et que l'élément à cellule équipé d'une électrode en fer produit de l'hydroxyde de fer et que le précipité composé d'hydroxyde d'aluminium, de sulfate d'aluminium et d'hydroxyde de fer monte, au moyen de l'hydrogène dégagé pendant l'électrolyse, vers une extrémité supérieure de la tour d'extraction (7) pour obtenir le floculat (15), ce qui permet l'extraction de sulfure d'hydrogène sous forme de sulfate d'aluminium de l'eau vers le floculat (15).

2. Procédé selon la revendication 1, **caractérisé en ce qu'**on fait passer la solution aqueuse à travers des éléments à cellule couplés successivement directement d'un élément à cellule vers le suivant.

3. Procédé selon la revendication 1 ou 2, **caractérisé en ce que** le courant électrique passant à travers chaque élément à cellule (2, 3, 4) est régulé individuellement.

4. Procédé selon la revendication 3, **caractérisé en ce que** les éléments à cellule situés les plus en amont et en aval sont constitués d'éléments à cellule équipés d'une électrode en aluminium entre lesquels sont prévus un ou plusieurs éléments à cellule équipés d'une électrode en fer.

5. Procédé selon l'une quelconque des revendications 1 à 4, **caractérisé en ce que** ce procédé permet l'élimination du sulfure d'hydrogène de l'eau produite dégagée dans le forage de pétrole ou de gaz.

6. Appareil de purification de solutions aqueuses contenant du sulfure d'hydrogène, ledit appareil comprenant une cellule électrolytique qui inclut au moins un élément à cellule (2, 4) équipé d'une électrode en aluminium et au moins un élément à cellule (3) équipé d'une électrode en fer, de même qu'une tour d'extraction (7) séparant l'eau et le floculat produit par électrolyse et équipée d'une canalisation de sortie d'eau purifiée (9), caractérisé en qu'on a fait passer la solution aqueuse à purifier de l'élément à cellule (2) équipé d'une électrode en aluminium directement dans l'élément à cellule (3) équipé d'une électrode en fer que la tour d'extraction est en communication de flux avec l'extrémité supérieure d'une cellule créée par les éléments à cellule (2, 3) couplés successivement.

7. Appareil selon la revendication 6, **caractérisé en ce que** la canalisation de sortie d'eau purifiée (9) constitue une cuve communicante avec la tour d'extraction (7).

8. Appareil selon la revendication 7, **caractérisé en ce que** la canalisation de sortie d'eau purifiée (9) est pourvue d'un système d'ajustement de niveau (14) qui permet la régulation de la teneur en humidité d'un floculat (15) s'accumulant dans une extrémité supérieure de la tour d'extraction (7).

9. Appareil selon la revendication 6, **caractérisé en ce que** les électrodes en fer et en aluminium sont couplées à des sources de courant séparées et contrôlées individuellement.

10. Appareil selon l'une quelconque des revendications 6 à 9, **caractérisé en ce que** la tour d'extraction est pourvue sur une partie de sa longueur d'une paroi en maille (8) qui est entourée d'un tuyau de collecte d'eau purifiée (16).
